# EUROPÄISCHE PATENTSCHRIFT

(11) **EP 1 088 641 B1**
(45) Veröffentlichungstag und Bekanntmachung des Hinweises auf die Patenterteilung: **14.05.2003**
(21) Anmeldenummer: 00120128.4
(22) Anmeldetag: 20.09.2000
(51) Int. Cl.: B29C 45/16

(54) **Werkzeug zum Spritzgiessen von Zahnbürstenkörpern aus mehreren Kunststoffkomponenten**
Mould for injection moulding of toothbrush bodies from several plastic components
Moule pour mouler par injection des corps de brosse à dents à partir de plusieurs composants en matière plastique

(30) Priorität: 29.09.1999 DE 29917164 U
(43) Veröffentlichungstag der Anmeldung: 04.04.2001
(73) Patentinhaber: G.B. BOUCHERIE, N.V., 8870 Izegem (BE)
(72) Erfinder: Boucherie, Bart Gerard, 8870 Izegem (BE)
(74) Vertreter: Degwert, Hartmut, Dipl.-Phys.

(56) Entgegenhaltungen:
- EP-A- 0 678 368
- WO-A-99/01055

## Beschreibung

Die Erfindung betrifft ein Werkzeug zum Spritzgießen von Zahnbürstenkörpern aus wenigstens zwei verschiedenen, nacheinander gespritzten Kunststoffkomponenten, gemäß dem Oberbegüff der mabhängigen Ansprüche 1 und 9.

Ein solches Werkzeug ist aus der EP 0 678 368 A1 bekannt. Es enthält zwei relativ zueinander bewegliche Formteile, die gemeinsam mehrere Gruppen von parallelen Formkavitäten bilden. Eines der Formteile weist für jede Gruppe von Formkavitäten eine Aussparung auf, in die ein Formeinsatz einsetzbar ist. In den Formeinsätzen sind Teilkavitäten ausgebildet, die dem Kopfbereich der Zahnbürstenkörper entsprechen. In zwei von insgesamt vier Gruppen der Formkavitäten wird die erste Kunststoffkomponente und in den beiden übrigen Gruppen die zweite Kunststoffkomponente gespritzt. Nach dem Spritzen der ersten Kunststoffkomponente werden die Formeinsätze mit den daran haftenden Rohlingen aus den Formkavitäten herausgehoben und in die Formkavitäten des anderen Gruppenpaares zum Spritzen der zweiten Kunststoffkomponente eingelegt.

Die Formeinsätze sind am Umfang einer kreisrunden Drehscheibe angeordnet, mittels der die Formeinsätze zwischen den Gruppen von Formkavitäten bewegbar sind. Dadurch ergibt sich für die Formkavitäten eine Anordnung allgemein radial vom Mittelpunkt der Drehscheibe fortweisend. Zwischen den Gruppen von Formkavitäten verbleibt an den Formteilen eine ungenutzte Fläche.

Durch die Erfindung wird eine wesentlich kompaktere Anordnung der Gruppen von Formkavitäten ermöglicht.

Gemäß einem ersten in Anspruch 1 definierten Lösungsweg der Erfindung sind die Formkavitäten jedes Gruppenpaares zueinander parallel und zu denen des anderen Gruppenpaares senkrecht angeordnet. Eine Gruppe jedes Gruppenpaares von Formkavitäten ist senkrecht zur Längsrichtung der Formkavitäten gegen die andere Gruppe versetzt. Die Kopfenden der Formkavitäten einer Gruppe jedes Gruppenpaares sind aufeinander zu gerichtet. Durch diese Anordnung der Gruppen von Formkavitäten wird die verfügbare Fläche der vorzugsweise rechteckigen oder quadratischen Formteile optimal ausgenutzt. Die Gruppen von Formkavitäten können eng benachbart an den Formteilen angeordnet werden. Die Gruppen von Formkavitäten sind, auf ein sie umgebendes Rechteck bezogen, vorzugsweise einander diagonal gegenüberliegend angeordnet, wobei je zwei einander diagonal gegenüberliegende Gruppen von Formkavitäten ein Gruppenpaar bilden, dessen Formkavitäten zueinander parallel, aber entgegengesetzt orientiert sind. Die Kopfbereiche der Formkavitäten jedes Gruppenpaares liegen in einer Reihe oder in zwei benachbarten Reihen, so daß die entsprechenden Formeinsätze auf einem gemeinsamen Träger angebracht werden können, der zum Umsetzen der mit der ersten Kunststoffkomponente gespritzten Rohlinge aus dem ersten Gruppenpaar von Formkavitäten in die Formkavitäten des zweiten Gruppenpaares angehoben und um 90° gedreht wird.

Gemäß einem zweiten in Anspruch 9 definierten Lösungsweg der Erfindung sind die Formkavitäten mit ihrer Längsrichtung tangential zu einer Kreisbahn orientiert, auf der die Formeinsätze beim Umsetzen von einer Gruppe von Formkavitäten in eine andere bewegt werden. Diese Ausführungsform ist besonders dann zweckmäßig, wenn die Bürstenkörper aus mehr als zwei Kunststoffkomponenten gespritzt werden.

Weitere Merkmale und Vorteile der Erfindung ergeben sich aus der folgenden Beschreibung mehrerer Ausführungsformen und aus den Zeichnungen, auf die Bezug genommen wird. In den Zeichnungen zeigen:
- Figur 1 eine Draufsicht einer ersten Ausführungsform eines Formteils des Werkzeugs;
- Figur 2 einen Schnitt entlang Linie II-II in Figur 1;
- Figur 3 eine Draufsicht eines Formteils nach einer zweiten Ausführungsform des Werkzeugs;
- Figur 4 eine Draufsicht eines Formteils nach einer dritten Ausführungsform;
- Figur 5 eine Draufsicht eines Formteils nach einer vierten Ausführungsform; und
- Figur 6 eine Draufsicht eines Formteils nach einer fünften Ausführungsform.

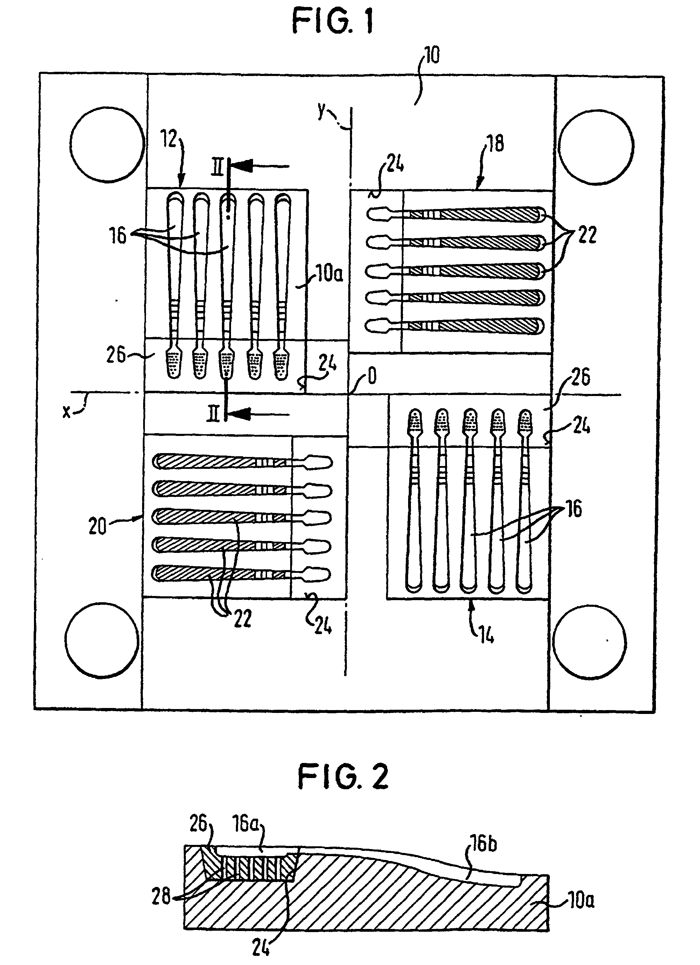

Von dem Werkzeug zum Spritzgießen von Zahnbürstenkörpern ist in den Figuren jeweils nur ein feststehendes Formteil 10 gezeigt, das mit einem komplementären, beweglichen Formteil in bekannter Weise zusammenwirkt. In dem Formteil 10 sind zwei Gruppen 12, 14 von Formkavitäten 16 zum Spritzen von Rohlingen aus einer ersten Kimststoffkomponente und zwei Gruppen 18, 20 von Formkavitäten 22 zum Spritzen der zweiten Kunststoffkomponente ausgebildet. Die Gruppen 12 und 14 von Formkavitäten 16 bilden ein erstes Gruppenpaar, und die Gruppen 18, 20 von Formkavitäten 22 bilden ein zweites Gruppenpaar. Die Gruppen jedes Gruppenpaares 12, 14 bzw. 18, 20 sind, bezogen auf ein die Gruppen umgebendes Rechteck, diagonal einander gegenüberliegend angeordnet. Wenn mittig zwischen den Gruppen von Formkavitäten 16, 22 ein rechtwinkliges Koordinatensystem mit dem Ursprung O gelegt wird, so grenzen die Gruppen 12 und 14 mit einer Seite an die x-Achse und die Gruppen 18, 20 mit einer Seite an die y-Achse an. Innerhalb jedes Gruppenpaares 12, 14 bzw. 18, 20 sind die Formkavitäten 16, 22 parallel zueinander, aber entgegengesetzt orientiert, so daß die Kopfbereiche der Formkavitäten gegeneinander orientiert sind. Ferner sind die Formkavitäten 16, 22 jeweils der einen Gruppe jedes Gruppenpaares gegenüber denen der anderen Gruppe rechtwinklig zur Längserstreckung der Formkavitäten versetzt, so daß in Figur 1 die Gruppen 12, 14 auf entgegengesetzten Seiten der x-Achse und die Gruppen 18, 20 auf entgegengesetzten Seiten der y-Achse liegen.

Jede Gruppe 12, 14, 18, 20 von Formkavitäten 16, 22 ist mit einer sich über die Kopfbereiche der Formkavitäten erstreckenden Aussparung 24 versehen, in die ein Formeinsatz 26 passend einsetzbar ist. In dem Formeinsatz 26 ist, wie aus Figur 2 ersichtlich, eine dem Kopfbereich eines Zahnbürstenkörpers entsprechende Teilkavität 16a ausgebildet; die übrigen Bereiche 16b der Formkavitäten sind in einem Formblock 10a ausgebildet. Die Formeinsätze 26 sind mit Durchgangslöchern 28 zur Aufnahme von Borstenbüscheln versehen.

Die Formeinsätze 26 sind vorzugsweise an einem gemeinsamen Träger befestigt, der um eine durch den Mittelpunkt O gehende Achse in Schritten von 90° drehbar ist.

Im Betrieb befinden sich die Formeinsätze 26 zum Spritzen von Rohlingen aus der ersten Kunststoffkomponente in den Formblöcken 10a des ersten Gruppenpaares 12, 14, nachdem sie zuvor mit Borstenbüscheln beladen wurden. Nach dem Spritzen der ersten Kunststoffkomponente werden die Formeinsätze 26 aus den Formblöcken 10a herausgehoben, wobei die gespritzten Rohlinge an ihnen anhaften. Durch Drehung um 90° werden die Formeinsätze 26 mit den Rohlingen über den Formkavitäten 22 des zweiten Gruppenpaares 18, 20 in Stellung gebracht und abgesenkt, wobei die Rohlinge in die Formkavitäten 22 eingelegt werden. Die zweite Kunststoffkomponente wird nun in den Formkavitäten 22 gespritzt. In einem anschließenden Takt werden die fertiggespritzten Zahnbürstenkörper ausgeworfen.

Alternativ zu der beschriebenen Ausführungsform werden die Formeinsätze 26 nicht mit Durchgangslöchern 28, sondern mit Lochstempeln versehen, die beim Spritzen der ersten Komponente im Kopfbereich der Rohlinge ein Lochfeld zum Einsetzen von Borstenbüscheln ausbilden.

Bei der zuerst beschriebenen Ausführungsform der Formeinsätze 26 mit Durchgangslöchern 28 kann es vorteilhaft sein, diese Formeinsätze lösbar an einem gemeinsamen Träger anzuordnen, so daß sie zu einer Borstenbüschel-Ladestation transportiert und nach dem Beladen mit Borstenbüscheln zum Werkzeug zurückgebracht werden können. Bei der Ausführungsform mit Lochstempeln können die Formeinsätze 26 hingegen starr an dem gemeinsamen Träger befestigt werden.

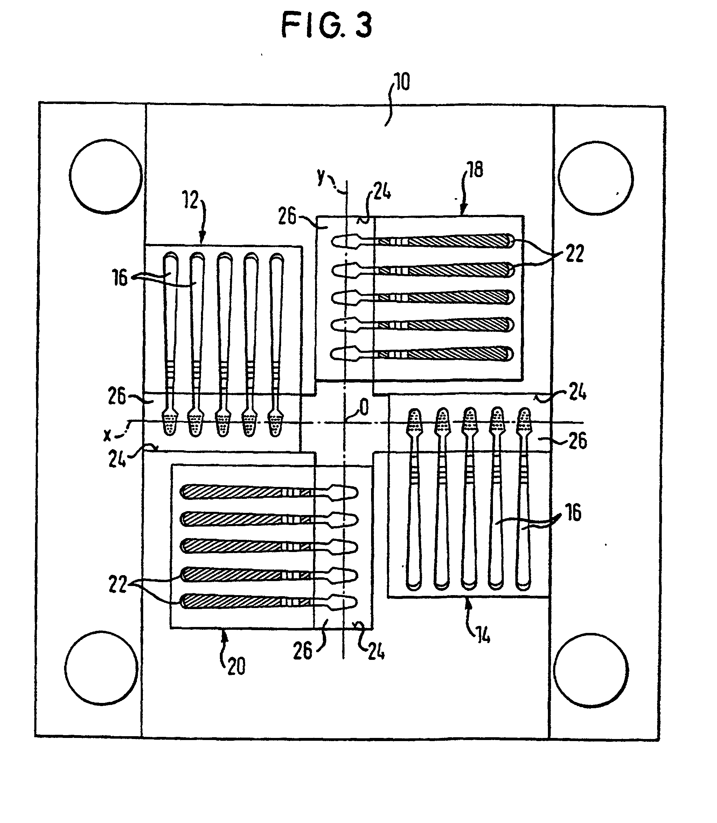

Bei der in Figur 3 gezeigten Ausführungsform sind die Gruppen 12, 14 sowie 18, 20 von Formkavitäten 16 bzw. 22 grundsätzlich in gleicher Weise angeordnet wie bei der Ausführungsform nach Figur 1, jedoch mit der Besonderheit, daß die Aussparungen 24 für die Formeinsätze 26 bei jedem der Gruppenpaare 12, 14 und 18, 20 in einer Reihe angeordnet sind. Wiederum bezogen auf ein gemeinsames rechtwinkliges Koordinatensystem, dessen Ursprung O im Mittelpunkt zwischen den Gruppen 12, 14 und 18, 20 gelegen ist, werden somit die Aussparungen 24 der Gruppen 12 und 14 durch die x-Achse geschnitten, und die Aussparungen 24 der Gruppen 18, 20 werden durch die y-Achse geschnitten. Wie der Vergleich der Figuren 1 und 3 zeigt, wird bei der in Figur 3 gezeigten Ausführungsform die verfügbare Fläche des Formteils 10 noch besser ausgenutzt als bei der Ausführungsform nach Figur 1.

Die vorstehend beschriebenen Ausführungsformen stellen einen ersten Lösungsweg dar, bei dem die Fläche einer quadratischen oder rechtwinkligen Form optimal zur Unterbringung der Gruppen von Formkavitäten ausgenutzt werden kann.

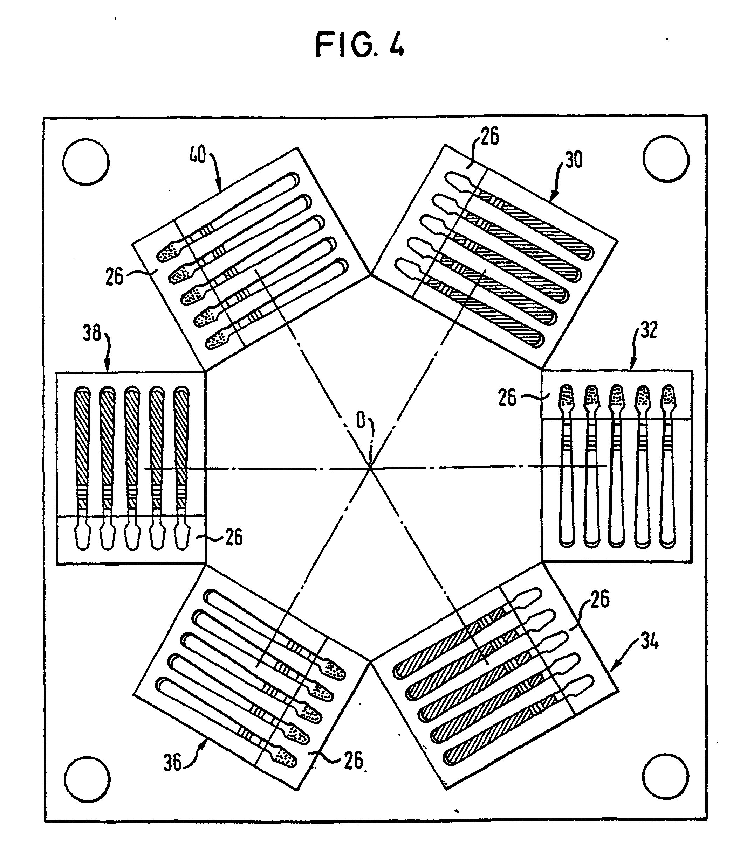

Die in den Figuren 4 bis 6 gezeigten Ausführungsformen sind aber besser geeignet, wenn Zahnbürstenkörper aus mehr als zwei Kunststoffkomponenten gespritzt werden.

Bei der Ausführungsform nach Figur 4 sind insgesamt sechs Gruppen 30, 32, 34, 36, 38, 40 von parallelen Formkavitäten vorgesehen. Bezogen auf eine Kreisbahn um den gemeinsamen Mittelpunkt O, auf dem die entsprechenden Formeinsätze 26 bewegt werden, wenn sie zwischen den Gruppen umgesetzt werden, sind die Gruppen 30 bis 40 von Formkavitäten unter gleichen Winkelabständen von 60° angeordnet. Die Längsrichtung der Formkavitäten ist tangential zu der Kreisbahn orientiert, auf der die Formeinsätze 26 bewegt werden. In Umfangsrichtung dieser Kreisbahn sind die Gruppen 30 bis 40 von Formkavitäten aufeinanderfolgend jeweils verschiedenen Kunststoffkomponenten zugeordnet. Die erste Kunststoffkomponente wird in den Formkavitäten der Gruppen 32, 36 und 40 gespritzt; die zweite Kunststoffkomponente wird in den Formkavitäten der Gruppen 30, 34 und 38 gespritzt.

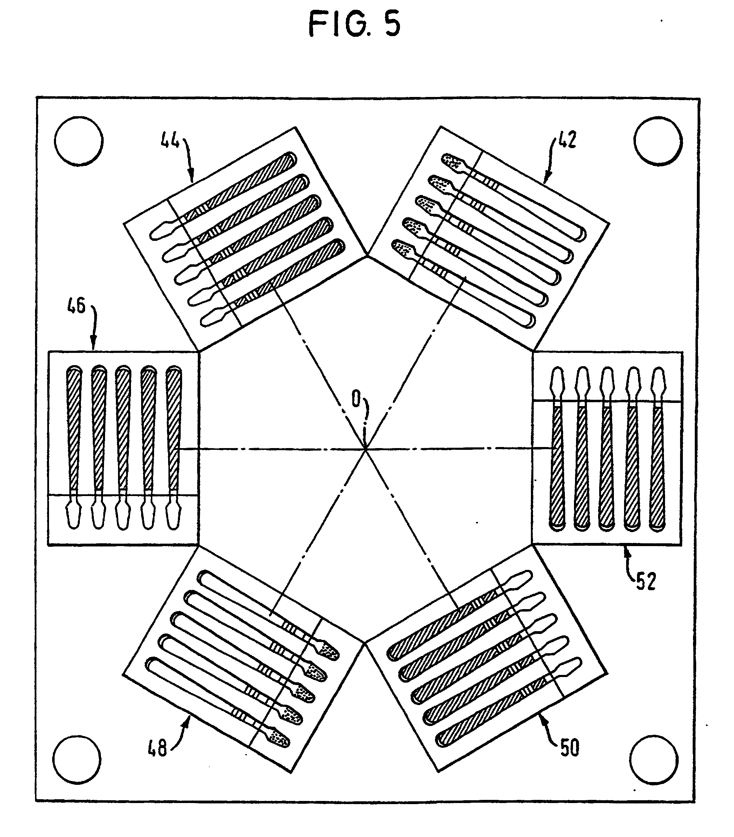

Auch bei der in Figur 5 gezeigten Ausführungsform sind sechs Gruppen von Formkavitäten in gleicher Weise wie bei der Ausführungsform nach Figur 4 angeordnet. Bei dieser Ausführungsform werden die Bürstenkörper jedoch aus drei Kunststoffkomponenten gespritzt. So folgen in Figur 5 in Umfangsrichtung aufeinander eine erste Gruppe 42 für die erste Komponente, eine zweite Gruppe 44 für die zweite Komponente, eine dritte Gruppe 46 für die dritte Komponente, eine vierte Gruppe 48 für die erste Komponente, eine fünfte Gruppe 50 für die zweite Komponente und eine sechste Gruppe 52 für die dritte Komponente.

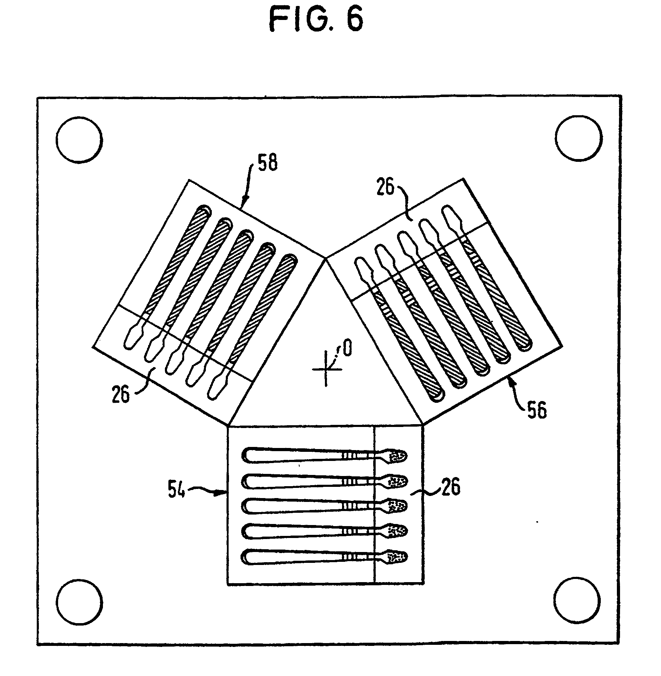

Auch die in Figur 6 gezeigte Ausführungsform ist für Bürstenkörper aus drei Kunststoffkomponenten bestimmt. Es sind jedoch nur drei Gruppen von parallelen Formkavitäten vorhanden: Eine erste Gruppe 54 für die erste Kunststoffkomponente, eine zweite Gruppe 56 für die zweite und eine dritte Gruppe 58 für die dritte Kunststoffkomponente. Bezogen auf eine Kreisbahn, auf der die Formeinsätze 26 bewegt werden, wenn sie zwischen den verschiedenen Gruppen umgesetzt werden, sind die Gruppen von Formkavitäten unter Winkelabständen von 120° angeordnet.

## Patentansprüche

1. Werkzeug zum Spritzgießen von Zahnbürstenkörpern aus wenigstens zwei verschiedenen, nacheinander gespritzten Kunststoffkomponenten, mit zwei relativ zueinander beweglichen Formteilen, die gemeinsam mehrere Gruppen von parallelen Formkavitäten (16,22) bilden, wobei
- eines der Formteile für jede Gruppe von Formkavitäten eine Aussparung (24) aufweist, in die ein Formeinsatz (26) einsetzbar ist,
- in den Formeinsätzen Teilkavitäten (16a) ausgebildet sind, die dem Kopfbereich der Zahnbürstenkörper entsprechen,
- zwei von vier Gruppen der Formkavitäten ein erstes Gruppenpaar (12,14) bilden, in dem die erste Kunststoffkomponente gespritzt wird,
- zwei weitere der vier Gruppen der Formkavitäten ein zweites Gruppenpaar (18,20) bilden, in dem die zweite Kunststoffkomponente gespritzt wird;
**dadurch gekennzeichnet, daß**
a) die Formkavitäten jedes Gruppenpaares zueinander parallel und zu denen des anderen Gruppenpaares senkrecht sind;
b) eine Gruppe jedes Gruppenpaares von Formkavitäten senkrecht zur Längsrichtung der Formkavitäten gegen die andere Gruppe versetzt ist;
c) die Kopfenden der Formkavitäten einer Gruppe jedes Gruppenpaares aufeinander zu gerichtet sind.

2. Werkzeug nach Anspruch 1, **dadurch gekennzeichnet, daß** die Gruppen von Formkavitäten, auf ein sie umgebendes Rechteck bezogen, einander diagonal gegenüberliegend angeordnet sind.

3. Werkzeug nach Anspruch 2, **dadurch gekennzeichnet, daß** die Formeinsätze jedes Gruppenpaares von Formkavitäten, auf ein rechtwinkliges, mittig in das Rechteck gelegtes Koordinatensystem bezogen, auf je einer der zwei Achsen gelegen sind.

4. Werkzeug nach Anspruch 2, **dadurch gekennzeichnet, daß** die Formeinsätze jedes Gruppenpaares von Formkavitäten, auf ein rechtwinkliges, mittig in das Rechteck gelegtes Koordinatensystem bezogen, an je eine der zwei Achsen angrenzend gelegen sind.

5. Werkzeug nach einem der vorstehenden Ansprüche, **dadurch gekennzeichnet, daß** die Formeinsätze mit Lochstempeln zur Lochfelderzeugung versehen sind.

6. Werkzeug nach Anspruch 5, **dadurch gekennzeichnet, daß** die Formeinsätze an einem gemeinsamen Träger angeordnet sind, der um einen zwischen den Gruppen von Formkavitäten gelegenen Mittelpunkt um jeweils 90° weiterschaltbar ist.

7. Werkzeug nach einem der Ansprüche 1 bis 5, **dadurch gekennzeichnet, daß** die Formeinsätze mit Durchgangslöchern (28) zur Aufnahme von Borstenbüscheln versehen sind.

8. Werkzeug nach Anspruch 7, **dadurch gekennzeichnet, daß** die Formeinsätze von dem Werkzeug zu einer Borstenbüschel-Ladestation und wieder zum Werkzeug bewegbar sind.

9. Werkzeug zum Spritzgießen von Zahnbürstenkörpern aus wenigstens zwei verschiedenen, nacheinander gespritzten Kunststoffkomponenten, mit zwei relativ zueinander beweglichen Formteilen, die gemeinsam mehrere Gruppen von parallelen Formkavitäten bilden, wobei
- eines der Formteile für jede Gruppe von Formkavitäten eine Aussparung aufweist, in die ein Formeinsatz (26) einsetzbar ist,
- in den Formeinsätzen (26) Teilkavitäten ausgebildet sind, die dem Kopfbereich der Zahnbürstenkörper entsprechen,
**dadurch gekennzeichnet, daß** die Formkavitäten mit ihrer Längsrichtung tangential zu einer Kreisbahn orientiert sind, auf der die Formeinsätze (26) beim Umsetzen von einer Gruppe von Formkavitäten in eine andere bewegt werden.

10. Werkzeug nach Anspruch 9, **dadurch gekennzeichnet, daß** in Umfangsrichtung der Kreisbahn aufeinanderfolgende Gruppen von Formkavitäten jeweils verschiedenen Kunststoffkomponenten zugeordnet sind.

11. Werkzeug nach Anspruch 9 oder 10, **dadurch gekennzeichnet, daß** auf den Mittelpunkt der Kreisbahn bezogen sechs Gruppen von Formkavitäten (30, 32, 34, 36, 38, 40) in Winkelabständen von 60° vorgesehen sind.

12. Werkzeug nach Anspruch 9 oder 10, **dadurch gekennzeichnet, daß** auf den Mittelpunkt der Kreisbahn bezogen drei Gruppen (54,56,58) von Formkavitäten in Winkelabständen von 120° vorgesehen sind.

## Claims

1. A tool for the injection molding of toothbrush bodies consisting of at least two different, consecutively injection molded plastic components, comprising a pair of mold parts that can be moved relative to each other and that together form a plurality of groups of parallel mold cavities (16, 22), wherein
- one of the mold parts for each group of mold cavities has a recess (24) into which a mold insert (26) can be fitted,
- partial cavities (16a) are formed in the mold inserts, corresponding to the head areas of the toothbrush bodies,
- two of four groups of mold cavities form a first group pair (12, 14) in which the first plastic component is injection molded,
- two more of the four groups of the mold cavities form a second group pair (18,20) in which the second plastic component is injection molded;
**characterized in that**
(a) the mold cavities of each group pair are parallel to each other and perpendicular to those of the other group pair,
(b) one group of each group pair of mold cavities is offset perpendicularly to the lengthwise direction of the mold cavities with respect to the other group;
(c) the mold cavities of a group of each group pair have head ends that are oriented so as to face each other.

2. The tool according to Claim 1, **characterized in that** the groups of mold cavities are arranged diagonally across from each other, relative to a rectangle surrounding them.

3. The tool according to Claim 2, **characterized in that** the mold inserts of each group pair of mold cavities are each located on one of the two axes, relative to a right-angled coordinate system placed in the center of the rectangle.

4. The tool according to Claim 2, **characterized in that** the mold inserts of each group pair of mold cavities are each located adjacent to one of the two axes, relative to a right-angled coordinate system placed in the center of the rectangle.

5. The tool according to any of the preceding claims, **characterized in that** the mold inserts are provided with punching stamps to produce arrays of holes.

6. The tool according to Claim 5, **characterized in that** the mold inserts are mounted on a shared carrier that can be indexed by 90° at a time about a center located between the groups of mold cavities.

7. The tool according to any of claims 1 to 5, **characterized in that** the mold inserts are provided with through openings (28) for receiving tufts of bristles.

8. The tool according to Claim 7, **characterized in that** the mold inserts are movable from the tool to a bristle tuft loading station and back to the tool.

9. A tool for the injection molding of toothbrush bodies consisting of at least two different, consecutively injection molded plastic components, comprising a pair of mold parts that can be moved relative to each other and that together form a plurality of groups of parallel mold cavities, wherein
- one of the mold parts for each group of mold cavities has a recess into which a mold insert (26) can be fitted,
- partial cavities are formed in the mold inserts (26), corresponding to the head areas of the toothbrush bodies,
**characterized in that** the lengthwise direction of the mold cavities is oriented tangentially to a circular path along which the mold inserts (26) are moved during transfer from one group of mold cavities to another.

10. The tool according to Claim 9, **characterized in that** consecutive groups of mold cavities are each associated with different plastic components in the circumferential direction of the circular path.

11. The tool according to Claim 9 or 10, **characterized in that** six groups of mold cavities (30, 32, 34, 36, 38, 40) are provided at angular distances of 60°, relative to the center of the circular path.

12. The tool according to Claim 9 or 10, **characterized in that** three groups (54, 56, 58) of mold cavities are provided at angular distances of 120°, relative to the center of the circular path.

## Revendications

1. Outil de moulage par injection de corps de brosses à dents consistant en au moins deux différents composants de matière plastique moulés par injection l'un après l'autre, comportant deux parties de moule mobiles l'une par rapport à l'autre, lesquelles forment ensemble plusieurs groupes de cavités parallèles de moule (16, 22),
- une des pièces de moule présentant pour chaque groupe de cavités de moule un évidement (24) dans lequel un insert de moule (26) peut être introduit,
- dans les inserts de moule étant réalisées des cavités partielles (16a) qui correspondent à la région de tête des corps de brosses à dents,
- deux de quatre groupes de cavités de moule formant une première paire de groupes (12, 14) dans lequel le premier composant de matière plastique est moulé par injection,
- deux autres des quatre groupes de cavités de moule formant une deuxième paire de groupes (18, 20) dans lequel le deuxième composant de matière plastique est moulé par injection ;
**caractérisé en ce que**
a) les cavités de moule de chaque paire de groupes sont parallèles les unes aux autres et perpendiculaires à celles de l'autre paire de groupes ;
b) un groupe de chaque paire de groupes de cavités de moule est décalé par rapport à l'autre groupe, perpendiculairement à la direction longitudinale des cavités de moule;
c) les extrémités de tête des cavités de moule d'un groupe de chaque paire de groupes sont orientés les unes vers les autres.

2. Outil selon la revendication 1, **caractérisé en ce que** les groupes de cavités de moule sont agencées en diagonale à l'opposé les unes des autres par rapport à un de moule qui les entoure.

3. Outil selon la revendication 2, **caractérisé en ce que** les inserts de moule de chaque paire de groupes de cavités de moule sont situés chacun sur l'un des deux axes, par rapport à un système de coordonnées rectangulaire placé au centre du rectangle.

4. Outil selon la revendication 2, **caractérisé en ce que** les inserts de moule de chaque paire de groupes de cavités de moule sont situés chacun adjacent à l'un des deux axes, par rapport à un système de coordonnées rectangulaire placé au centre du rectangle.

5. Outil selon l'une des revendications précédentes, **caractérisé en ce que** les inserts de moule sont pourvus de poinçons pour engendrer un réseau de trous.

6. Outil selon la revendication 5, **caractérisé en ce que** les inserts de moule sont agencés sur un support commun qui peut être indexé à chaque fois de 90° autour d'un centre situé entre les groupes de cavités de moule.

7. Outil selon l'une des revendications 1 à 5, **caractérisé en ce que** les inserts de moule sont pourvus de perçages (28) destinés à recevoir des touffes de soies.

8. Outil selon la revendication 7, **caractérisé en ce que** les inserts de moule peuvent être déplacés depuis l'outil vers une station de chargement de touffes de soies et de nouveau vers l'outil.

9. Outil de moulage par injection de corps de brosses à dents consistant en au moins deux différents composants de matière plastique moulés par injection l'un après l'autre, comportant deux parties de moule mobiles l'une par rapport à l'autre, lesquelles forment ensemble plusieurs groupes de cavités parallèles de moule (16, 22),
- une des pièces de moule présentant pour chaque groupe de cavités de moule un évidement (24) dans lequel un insert de moule (26) peut être introduit,
- dans les inserts de moule étant réalisées des cavités partielles (16a) qui correspondent à la région de tête des corps de brosses à dents,
**caractérisé en ce que** les cavités de moule sont orientées avec leur direction longitudinale tangentiellement à un trajet circulaire sur lequel se déplacent les inserts de moule (26) lors du transfert depuis un groupe de cavités de moule jusque dans un autre.

10. Outil selon la revendication 9, **caractérisé en ce que** des groupes de cavités de moule se succédant en direction périphérique du trajet circulaire sont chacun associé à différents composants de matière plastique.

11. Outil selon la revendication 9 ou 10, **caractérisé en ce que** par rapport au centre du trajet circulaire, six groupes de cavités de moule (30, 32, 35, 36, 38, 40) sont prévus à des espacements angulaires de 60°.

12. Outil selon la revendication 9 ou 10, **caractérisé en ce que** par rapport au centre du trajet circulaire, trois groupes (54, 56, 58) de cavités de moule sont prévus à des espacements angulaires de 120°.
